# FASCICULE DE BREVET EUROPEEN

(11) **EP 2 783 414 B1**
(45) Date de publication et mention de la délivrance du brevet: **16.09.2015**
(21) Numéro de dépôt: 12806561.2
(22) Date de dépôt: 23.11.2012
(51) Int. Cl.: H01M 8/06, C02F 1/66, H01M 8/04, C02F 1/28, C02F 1/32, C02F 1/68, C02F 1/78

(54) **PROCÉDÉ ET DISPOSITIFS DE REMINÉRALISATION ET/OU DE CORRECTION DE pH D'UNE EAU PRODUITE DANS UN AÉRONEF**
VERFAHREN UND VORRICHTUNGEN ZUR REMINERALISIERUNG UND/ODER ZUR KORREKTUR DES PH-WERTES VON IN EINEM FLUGZEUG ERZEUGTEM WASSER
METHOD AND DEVICES FOR REMINERALIZATION AND/OR FOR CORRECTING THE PH OF WATER PRODUCED IN AN AIRCRAFT

(30) Priorité: 25.11.2011 FR 1160828
(43) Date de publication de la demande: 01.10.2014
(73) Titulaire: Prodose, 31660 Bessieres (FR)
(72) Inventeur: BOUKARI, Morou, 31660 Bessieres (FR); AURIOL, Marc, 31660 Bessieres (FR)
(74) Mandataire: Richebourg, Michel François
(86) Numéro de dépôt international: PCT/FR2012/052711
(87) Numéro de publication internationale: WO 2013/076432

(56) Documents cités:
- DE-A1-102011 102 177
- JP-A- 2006 228 619
- US-A1- 2004 038 089
- US-A1- 2004 043 276
- US-B1- 7 771 599
- JUAN E TIBAQUIR ET AL: "Recovery and quality of water produced by commercial fuel cells", INTERNATIONAL JOURNAL OF HYDROGEN ENERGY, ELSEVIER SCIENCE PUBLISHERS B.V., BARKING, GB, vol. 36, no. 6, 15 décembre 2010 (2010-12-15), pages 4022-4028, XP028172855, ISSN: 0360-3199, DOI: 10.1016/J.IJHYDENE.2010.12.072 [extrait le 2010-12-24]

## Description

### DOMAINE D'APPLICATION DE L'INVENTION

La présente invention a trait au domaine des équipements embarqués dans un aéronef transportant des passagers et notamment aux adaptations permettant, dans les meilleures conditions, de reminéraliser et de corriger le pH des eaux produites dans un aéronef.

### DESCRIPTION DE L'ART ANTÉRIEUR

Afin de diminuer la consommation de kérosène, l'intensité du bruit et la production de dioxyde de carbone, les constructeurs aéronautiques s'orientent vers la mise en oeuvre d'une motorisation électrique pour la mise en mouvement au sol des aéronefs.

Une solution technologique pour une telle mise en oeuvre réside dans l'exploitation d'une pile à combustible pour alimenter le ou les moteurs électriques.

En parallèle de la production d'électricité, la réaction chimique mise en oeuvre par une pile à combustible produit de l'eau et de la chaleur.

Dans un souci de diminution du volume d'eau à embarquer par un aéronef transportant des passagers, il peut être envisagé d'exploiter l'eau produite par la pile à combustible comme eau potable de consommation et d'alimentation des installations sanitaires.

Une telle exploitation se heurte néanmoins à plusieurs problèmes techniques décrits ci-dessous.

L'eau produite par une pile à combustible est déminéralisée et acide et nécessite donc une opération de reminéralisation et de correction de son pH avant d'être injectée dans le réseau d'alimentation de l'aéronef.

En addition de l'aspect de protection de la santé des passagers, cette opération est également nécessaire du fait de la fragilité des conduites généralement en acier inoxydable dudit réseau d'alimentation.

Or, si des solutions de reminéralisation et de correction de pH existent, ces dernières requièrent un temps et/ou une surface d'exposition entre le produit de reminéralisation et/ou de correction de pH et l'eau qui ne cadrent pas avec le temps d'exposition, l'encombrement et/ou la masse disponible dans un aéronef.

Ces différents problèmes techniques n'ont pas permis jusqu'ici d'envisager sérieusement l'exploitation de la production d'eau d'une pile à combustible comme eau de consommation et d'alimentation des installations sanitaires d'un aéronef transportant des passagers malgré les avantages identifiés.

Le brevet US2004/043276 décrit un dispositif comprenant des piles à combustible, un réservoir pour la purification de l'eau et un réservoir pour la minéralisation. Le brevet JP2006228619 divulgue la correction du pH par le mélange d'eau contenue dans un réservoir et d'eau purifiée en sortie d'une pile à combustible.

### DESCRIPTION DE L'INVENTION

Partant de cet état de fait, la demanderesse a mené des recherches visant à obvier aux inconvénients précités.

Ces recherches ont abouti à la conception d'un procédé de reminéralisation et de correction de pH pour une eau produite par une pile à combustible embarquée dans un aéronef, remarquable en ce qu'il consiste à dériver une partie de l'eau produite par la pile vers au moins un réservoir de traitement contenant un réactif à saturation et à mélanger le flux d'eau traitée issue du réservoir de traitement avec le flux d'eau non dérivé afin d'obtenir une eau avec la minéralisation et/ou le pH souhaités.

Cette caractéristique est particulièrement avantageuse en ce qu'elle évite d'avoir à traiter par contact direct avec le réactif, la totalité de l'eau issue de la pile à combustible.

L'utilisation d'un réactif atteignant un niveau de saturation permet de contrôler les paramètres de traitement de l'eau issue du réservoir de traitement.

Le réservoir de traitement peut contenir un seul réactif de traitement et être associé à d'autres réservoirs oubien contenir plusieurs réactifs destinés à plusieurs traitements.

Il n'est alors plus nécessaire de disposer d'un temps d'exposition avec un réactif ou de doser un réactif en regard d'un volume, dès lors que le procédé de l'invention peut garantir le passage d'un certain volume d'eau à l'intérieur d'un réservoir de traitement dont le niveau de traitement est maîtrisé assurant après mélange, les niveaux de minéralisation et/ou de pH souhaités. De plus, la reminéralisation et/ou la correction de pH sont activées dès la circulation de l'eau dans le réservoir de traitement sans nécessiter un temps d'exposition important.

On comprend que la mise en oeuvre d'un tel procédé va conduire à des solutions particulièrement compactes conformes aux objectifs de l'invention. Le procédé de l'invention permet donc d'envisager l'exploitation de l'eau issue d'une pile à combustible embarquée dans un aéronef à des fins de consommation pour les passagers et d'alimentation des installations sanitaires dudit aéronef.

Ainsi, un autre objet de l'invention réside dans le dispositif permettant de mettre en oeuvre le procédé ci-dessus décrit. Selon l'invention, le dispositif comprend un premier réservoir répartiteur dans lequel arrive l'eau déminéralisée issue de la pile et d'où partent au moins deux conduites :
- une première conduite débouche dans un deuxième réservoir de traitement comprenant un réactif à saturation avec lequel l'eau entre en contact à des fins de reminéralisation et/ou de correction de pH, l'eau ainsi traitée étant évacuée vers une troisième conduite,
- une deuxième conduite laisse circuler une eau directement issue du premier réservoir et est rejointe par l'eau traitée issue du deuxième réservoir à des fins de mélange.

L'utilisation d'un réservoir répartiteur garantit la dérivation de l'eau issue de la pile.

Afin de doubler les capacités d'un tel dispositif, ce dernier comprend selon une autre caractéristique particulièrement avantageuse de l'invention, un premier réservoir répartiteur dans lequel arrive l'eau déminéralisée issue de la pile et d'où partent trois conduites :
- deux conduites débouchent chacune dans un réservoir différent de traitement comprenant un réactif à saturation avec lequel l'eau entre à contact, l'eau ainsi traitée étant évacuée par une quatrième et une cinquième conduite,
- une troisième conduite issue du réservoir répartiteur laisse circuler une eau directement issue du premier réservoir et est rejointe par l'eau traitée issue des deux réservoirs de traitement à l'intérieur d'un réservoir de mélange à des fins de mélange.

Un tel dédoublement des capacités de traitement permet d'envisager une spécialisation de ces derniers. Ainsi, selon une autre caractéristique particulièrement avantageuse de l'invention, un premier réservoir de traitement comprend un réactif à saturation assurant la reminéralisation et le deuxième réservoir de traitement comprend un réactif à saturation assurant la correction du pH.

Une version simplifiée du dispositif comprend une division de la conduite de sortie de l'eau déminéralisée issue de la pile à combustible en deux conduites dont l'une vient déboucher dans un réservoir de traitement, la conduite d'eau traitée sortant dudit réservoir venant rejoindre la conduite d'eau non traitée à des fins de mélange. Afin d'assurer le traitement de l'ensemble des paramètres, un tel dispositif peut être monté en cascade en amont ou en aval d'un dispositif identique de traitement d'un autre paramètre.

La mise en oeuvre du procédé, quel que soit le dispositif, est facilitée par le fait qu'une ou plusieurs conduites sont équipées d'un module de régulation de débit. Ainsi, selon le type de traitement ou les volumes déplacés, les débits sont ajustés.

Afin, par exemple, de filtrer l'eau issue de la pile mais également l'eau issue du traitement une ou plusieurs conduites sont équipées d'un module de filtration. Ces modules de filtration peuvent être disposés en extrémité de conduites à l'intérieur desdits réservoirs.

Bien entendu, le choix du réactif est prépondérant. Pour mettre en oeuvre ce procédé, le réactif est très rapide à atteindre sa saturation pour assurer la régularité des paramètres de traitement de l'eau issue des réservoirs de traitement dès le début du fonctionnement. De plus, il est conçu de sorte qu'il ne puisse agir que lorsque l'eau se déplace et non lorsqu'elle stagne évitant ainsi toute sur concentration.

Selon un mode de réalisation non limitatif, le réactif à saturation pour la reminéralisation et/ou pour la correction du Ph contient les éléments suivants associés ou non :
- carbonate de calcium,
- hydroxyde de calcium,
- bicarbonates,
- carbonates,
- acide sulfurique,
- résine échangeuse d'ions,
- absorbants minéraux,
- chlorure de sodium,
- chlorure de calcium.

Selon une autre caractéristique particulièrement avantageuse, le dispositif comprend des moyens de mesure de la minéralisation et du pH en sortie de dispositif communiquant les données à un automate de contrôle de module(s) de régulation de débit ce qui va permettre de proposer la reminéralisation et la correction de pH la plus précise possible et ce, automatiquement.

Selon une autre caractéristique particulièrement avantageuse de l'invention, le dispositif comprend au moins un débit-mètre permettant de mesurer le débit de l'eau avant ou après mélange et au moins une pompe doseuse positionnée en sortie de réservoir de traitement afin de doser la quantité d'eau traitée à mélanger à l'eau non traitée.

Selon un mode de réalisation préféré, le dispositif comprend un moyen de mesure du débit (ou débit-mètre) de l'eau non dérivée associé à un moyen de dosage de type pompe doseuse disposé en sortie de réservoir de traitement afin de réinjecter le volume d'eau traité adéquat dans l'eau non traitée.

Le dispositif comprend en outre un module de désinfection de l'eau après mélange final.

Selon une autre caractéristique particulièrement avantageuse de l'invention, les réservoirs de traitement sont détachables et interchangeables. Que ce soit dans une configuration spécialisée ou non, la conception des réservoirs de traitement comme consommables à durée de vie limitée garantit la maîtrise du procédé et des effets de ce dernier.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un dispositif conforme à l'invention.

### BRÈVE DESCRIPTION DES DESSINS

La figure 1 est un dessin schématique d'une vue en coupe d'un premier mode de réalisation d'un dispositif conforme à l'invention;
La figure 2 est un dessin schématique d'une vue en coupe d'un deuxième mode de réalisation d'un dispositif conforme à l'invention ;
La figure 3 est un dessin schématique d'une vue en coupe d'un troisième mode de réalisation d'un dispositif conforme à l'invention ;
La figure 4 est un dessin schématique d'une vue en coupe d'un quatrième mode de réalisation d'un dispositif conforme à l'invention.

### DESCRIPTION DES MODES DE RÉALISATION PRÉFÉRÉS

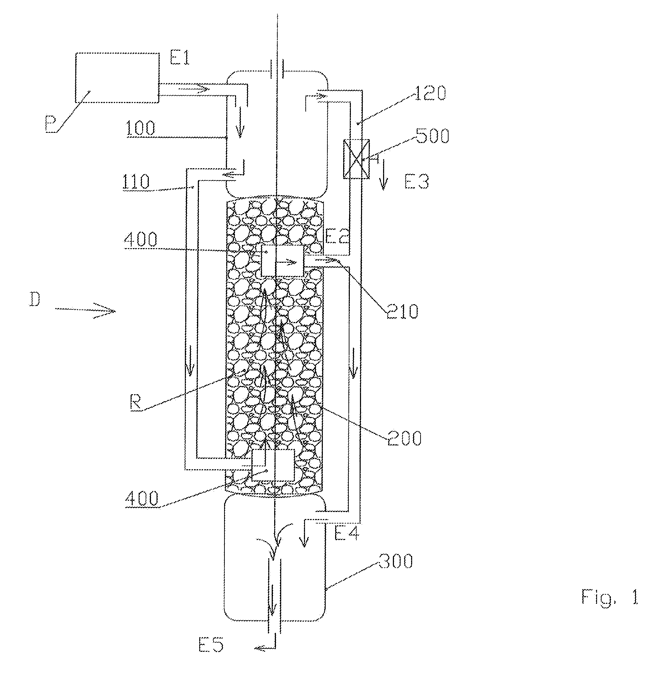

Tel qu'illustré sur le dessin de la figure 1, le dispositif référencé D dans son ensemble est un dispositif embarqué qui assure la reminéralisation et la correction de pH pour une eau référencée E1 par une pile à combustible (non illustrée) embarquée dans un aéronef (non illustré). Ce dispositif D comprend une succession de trois réservoirs cylindriques 100, 200, 300 de volumes différents, disposés coaxialement et de façon contiguë les uns à la suite des autres de façon à former un ensemble compact présentant un même diamètre extérieur.

Un premier réservoir répartiteur 100 reçoit l'eau E1 déminéralisée issue de la pile référencée P et d'où partent deux conduites 110 et 120. :
- une première conduite 110 débouche dans un deuxième réservoir de traitement 200 comprenant un réactif à saturation rapide R avec lequel l'eau entre à contact à des fins de reminéralisation et/ou de correction de pH, l'eau ainsi traitée référencée E2 étant évacuée vers une troisième conduite 210
- une deuxième conduite 120 laisse circuler une eau E3 directement issue du premier réservoir 100 et est rejointe par l'eau traitée E2 issue du deuxième réservoir à des fins de mélange par intersection des conduites 120 et 210.

Le troisième réservoir accueille et optimise le mélange d'eau E4. Une eau minéralisée et à pH corrigé E5 sort du réservoir 300.

Comme illustrés, plusieurs modules de filtration 400 sont disposés tout au long du parcours de l'eau traitée ou non. Selon un mode de réalisation non illustré, des moyens de filtration équipent le réservoir répartiteur de façon à ce que l'eau accueillie soit filtrée avant répartition dans les conduites 110 et 120.

De même, un module de régulation de débit 500 équipe la conduite 120. La différence de hauteur entre les sorties donnant accès aux conduites 110 et 120 garantit la circulation de l'eau dans le circuit de dérivation malgré la perte de charge due à la présence du réactif R dans le réservoir 200.

Selon un autre mode de réalisation non illustré, le premier réservoir 100 comprend également un volume de réactif afin d'assurer une première étape de traitement.

Il en est de même pour le dernier réservoir qui peut être équipé d'un module de filtration et/ou d'un volume de réactif finalisant le traitement.

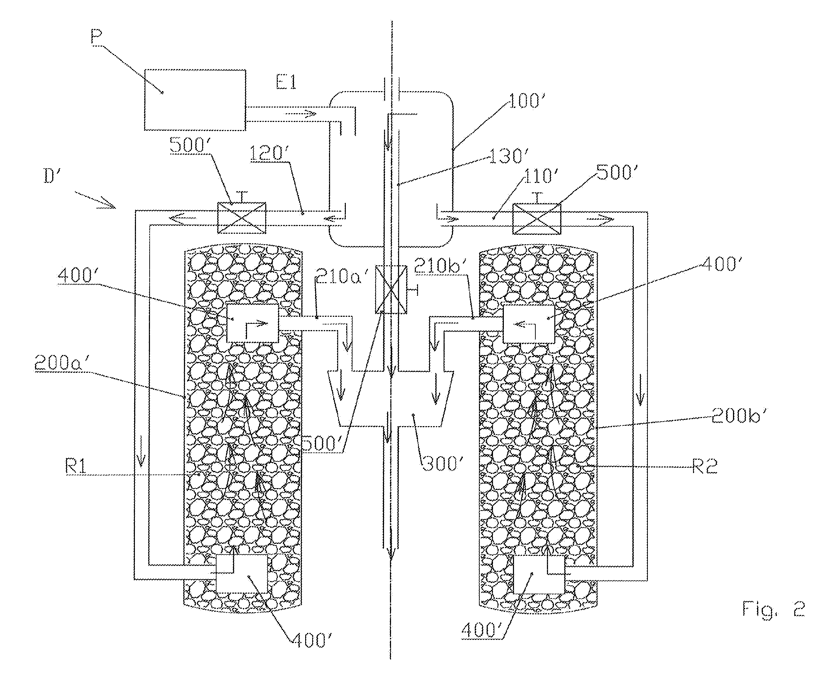

Le dispositif D' illustré par le dessin de la figure 2 met en oeuvre le même procédé mais au moyen de deux réservoirs de traitement 200a' et 200b'.

Comme pour le dispositif D, le dispositif D' comprend un premier réservoir répartiteur 100' dans lequel arrive l'eau déminéralisée E1 issue de la pile référencée P et d'où partent trois conduites.

Deux conduites 110' et 120' débouchent chacune dans un réservoir différent de traitement 200a' et 200b' comprenant un réactif à saturation rapide R1 et R2 qui peut être différent d'un réservoir à l'autre avec lequel l'eau entre à contact, l'eau ainsi traitée étant évacuée par une quatrième 210a' et une cinquième 210b' conduites.

La troisième conduite 130' laisse circuler une eau directement issue du premier réservoir 100' et est rejointe par l'eau traitée issue des deux réservoirs de traitement à l'intérieur d'un réservoir de mélange 300' à des fins de mélange.

Comme illustrés, plusieurs modules de filtration 400' équipent le dispositif D' notamment au niveau des entrées et sorties des réservoirs de traitement.

De plus, les conduites 110', 120', 130' sont équipées d'un module de filtration 500'.

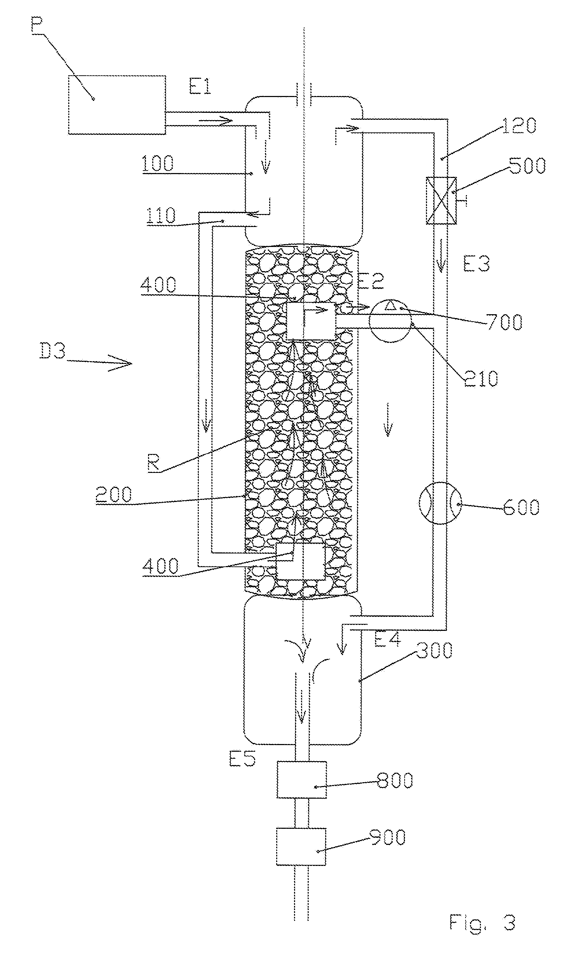

Le dispositif D3 illustré par le dessin de la figure 3 reprend les caractéristiques du dispositif D de la figure 1 auquel ont été ajoutées plusieurs fonctionnalités. Ainsi, comme illustré un débit-mètre 600 équipe la conduite 120 ici en aval de l'intersection avec la conduite 210 de sortie du réservoir de traitement. Cette conduite 210 est équipée en amont de son intersection avec la conduite 120 d'une pompe doseuse 700 dont le dosage est commandé en fonction du débit mesuré.

De plus, ce dispositif D3 comporte également en aval de la sortie du réservoir 300, un module de désinfection de l'eau 800 ainsi qu'un nouveau module de filtration 900. Selon un mode de réalisation préféré, le module de désinfection 800 comprend un moyen de production de rayon ultraviolet ainsi qu'un moyen de production d'ozone.
En outre, selon une autre caractéristique, la filtration du moyen de filtration finale 900 est réalisée par charbon actif.

Selon une autre caractéristique non illustré, le réservoir 300 comprend une pluralité de réservoirs de mélange communiquant entre eux afin de mieux gérer l'espace disponible.

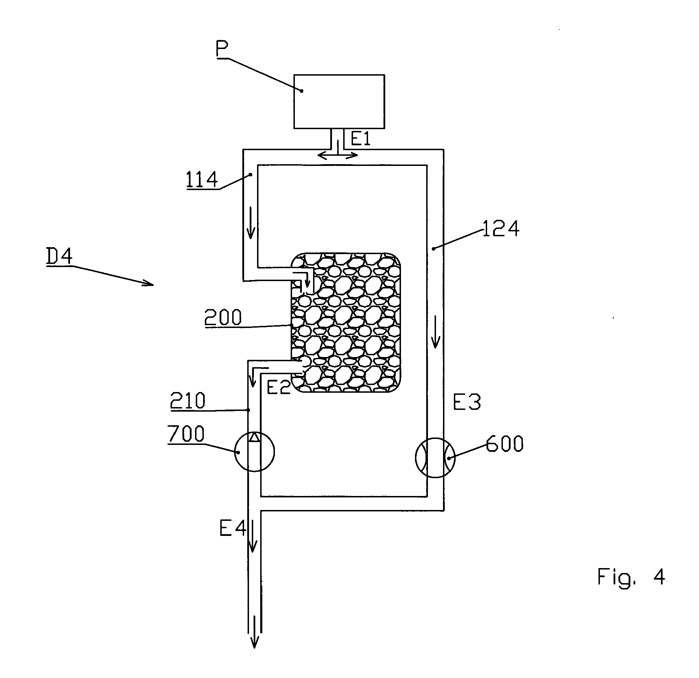

Le dispositif D4 illustré par le dessin de la figure 4 présente une configuration simplifiée où la conduite de sortie de l'eau E1 issue de la pile P est immédiatement divisée en deux conduites 114 et 124 dont l'une vient déboucher dans un réservoir de traitement 200. La conduite 210 d'eau traitée E2 sortant dudit réservoir 200 vient rejoindre la conduite 124 d'eau non traitée E3 à des fins de mélange conformément à l'invention pour se mélanger et former une eau avec le PH et/ou la minéralisation souhaitée E4. Comme illustrée pour le dispositif D3, la conduite 124 d'eau non traitée E3 est équipée d'un débit-mètre 600 qui vient commander le dosage de la pompe doseuse 700 équipant la conduite 210 de sortie de l'eau traitée E2. Une telle configuration simplifiée peut se décliner selon le nombre de paramètres à traiter ; Par exemple l'eau traitée pour être reminéralisée dans l'installation illustrée peut déboucher en entrée d'une installation identique dont le réservoir de traitement assure la correction du PH et ainsi de suite.

On comprend que le procédé et les dispositifs, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Procédé de reminéralisation et de correction de pH pour une eau produite par une pile à combustible (P) embarquée dans un aéronef, **CARACTÉRISÉ EN CE QU'**il consiste à dériver une partie de l'eau produite par la pile vers au moins un réservoir de traitement (200) contenant un réactif à saturation et à mélanger le flux d'eau traitée issue du réservoir de traitement (200) avec le flux d'eau non dérivé afin d'obtenir une eau avec la minéralisation et/ou le pH souhaités.

2. Dispositif (D, D3) permettant de mettre en oeuvre le procédé selon la revendication 1, **CARACTÉRISÉ PAR LE FAIT QU'**il comprend un premier réservoir répartiteur (100) dans lequel arrive l'eau déminéralisée issue de la pile et d'où partent au moins deux conduites (110, 120) :
- une première conduite (110) débouche dans un deuxième réservoir de traitement (200) comprenant un réactif à saturation (R) avec lequel l'eau entre en contact à des fins de reminéralisation et/ou de correction de pH, l'eau ainsi traitée étant évacuée vers une troisième conduite (210),
- une deuxième conduite (120) laisse circuler une eau directement issue du premier réservoir (100) et est rejointe par l'eau traitée issue du deuxième réservoir (200) à des fins de mélange.

3. Dispositif (D') permettant de mettre en oeuvre le procédé selon la revendication 1, **CARACTÉRISÉ PAR LE FAIT QU'**il comprend un premier réservoir répartiteur (100') dans lequel arrive l'eau déminéralisée issue de la pile et d'où part trois conduites (110', 120', 130'):
- deux conduites (110' et 120') débouchent chacune dans un réservoir différent de traitement (200a' et 200b') comprenant un réactif à saturation (R1, et R2) avec lequel l'eau entre à contact, l'eau ainsi traitée étant évacuée vers une quatrième (210a') et une cinquième conduite (210b'),
- une troisième conduite (130') laisse circuler une eau directement issue du premier réservoir (100') et est rejointe par l'eau traitée issue des deux réservoirs de traitement (200a', 200b') à l'intérieur d'un réservoir de mélange (300') à des fins de mélange.

4. Dispositif (D4) permettant de mettre en oeuvre le procédé selon la revendication 1, **CARACTÉRISÉ PAR LE FAIT QU'**il comprend une division de la conduite de sortie de l'eau déminéralisée issue de la pile à combustible (P) en deux conduites (114 et 124) dont l'une vient déboucher dans un réservoir de traitement (200), la conduite d'eau traitée sortant (210) dudit réservoir venant rejoindre la conduite d'eau non traitée (124)_à des fins de mélange.

5. Dispositif (D') selon la revendication 3, **CARACTÉRISÉ PAR LE FAIT QU'**un premier réservoir de traitement (200a') comprend un réactif à saturation (R1) assurant la reminéralisation et le deuxième réservoir de traitement (200b') comprend un réactif à saturation (R2) assurant la correction du pH.

6. Dispositif (D, D', D3, D4) selon l'une quelconque des revendications 2 à 5, **CARACTÉRISÉ PAR LE FAIT QU'**une ou plusieurs conduites sont équipées d'un module de régulation de débit (500, 500').

7. Dispositif (D, D', D3, D4) selon l'une quelconque des revendications 2 à 6, **CARACTÉRISÉ PAR LE FAIT QU'**une ou plusieurs conduites sont équipées d'un module de filtration (400, 400').

8. Dispositif (D, D', D3, D4) selon l'une quelconque des revendications 2 à 7, **CARACTÉRISÉ PAR LE FAIT QUE** le réactif à saturation pour la reminéralisation et/ou pour la correction de pH contient les éléments suivants associés ou non :
- carbonate de calcium,
- hydroxyde de calcium,
- bicarbonates,
- carbonates,
- acide sulfurique,
- résine échangeuse d'ions,
- absorbants minéraux,
- chlorure de sodium,
- chlorure de calcium.

9. Dispositif (D, D', D3, D4) selon l'une quelconque des revendications 2 à 7,**CARACTÉRISÉ PAR LE FAIT QU'**il comprend des moyens de mesure de la minéralisation et du pH en sortie de dispositif communiquant les données à un automate de contrôle de module(s) de régulation de débit.

10. Dispositif (D, D', D3, D4) selon l'une quelconque des revendications 2 à 8, **CARACTÉRISÉ PAR LE FAIT QUE** les réservoirs de traitement (200, 200a', 200b') sont détachables et interchangeables.

11. Dispositif (D, D', D3, D4) selon l'une quelconque des revendications 2 à 9, **CARACTÉRISÉ PAR LE FAIT QU'**il comprend au moins un débit mètre (600) permettant de mesurer le débit de l'eau avant ou après mélange et au moins une pompe doseuse (700) positionnée en sortie de réservoir de traitement afin de doser la quantité d'eau traitée à mélanger à l'eau non traitée.

12. Dispositif (D, D', D3, D4) selon l'une quelconque des revendications 2 à 11, **CARACTÉRISÉ PAR LE FAIT QU'**il comprend un module de désinfection (800) de l'eau après mélange final.

## Patentansprüche

1. Verfahren zur Remineralisierung und Korrektur des pH für Wasser, hergestellt durch eine Brennstoffzelle (P) an Bord eines Flugzeugs, **dadurch gekennzeichnet, dass** es darin besteht, einen Teil des von der Zelle erzeugten Wassers in mindestens einen Behandlungsbehälter (200) abzuleiten, der ein Sättigungsreagens enthält, und den Fluss von behandeltem Wasser, das aus dem Behandlungsbehälter (200) stammt, mit dem Fluss von nicht abgeleitetem Wasser zu mischen, um Wasser mit der gewünschten Mineralisierung und/oder dem gewünschten pH zu erhalten.

2. Vorrichtung (D, D3), das ermöglicht, das Verfahren nach Anspruch 1 durchzuführen, **dadurch gekennzeichnet, dass** es einen ersten Verteilungsbehälter (100) umfasst, in dem das demineralisierte Wasser ankommt, das aus der Zelle stammt, und von wo mindestens zwei Leitungen (110, 120) ausgehen:
- eine erste Leitung (110) mündet in einen zweiten Behandlungsbehälter (200), umfassend ein Sättigungsreagens (R), mit dem das Wasser zum Zweck der Remineralisierung und/oder der Korrektur des pH in Kontakt tritt, wobei das so behandelte Wasser in eine dritte Leitung (210) abgeleitet wird,
- eine zweite Leitung (120) lässt Wasser zirkulieren, das direkt aus dem ersten Behälter (100) stammt, und mit dem sich das behandelte Wasser, das aus dem zweiten Behälter (200) stammt, zur Mischung verbindet.

3. Vorrichtung (D'), das ermöglicht, das Verfahren nach Anspruch 1 durchzuführen, **dadurch gekennzeichnet, dass** es einen ersten Verteilungsbehälter (100') umfasst, in dem das demineralisierte Wasser ankommt, das aus der Zelle stammt, und von dem drei Leitungen (110', 120', 130') ausgehen.
- zwei Leitungen (110' und 120') münden jeweils in einen verschiedenen Behandlungsbehälter (200a' und 200b'), umfassend ein Sättigungsreagens (R1 und R2), mit dem das Wasser in Kontakt tritt, wobei das so behandelte Wasser in eine vierte (210a') und eine fünfte Leitung (210b') abgeleitet wird,
- eine dritte Leitung (130') lässt Wasser zirkulieren, das direkt aus dem ersten Behälter (100') stammt und mit dem sich das behandelte Wasser, das aus den zwei Behandlungsbehältern (200a', 200b') im inneren eines Mischbehälters (300') stammt, zur Mischung verbindet.

4. Vorrichtung (D4), das ermöglicht, das Verfahren nach Anspruch 1 durchzuführen, **dadurch gekennzeichnet, dass** es eine Teilung der Ausgangsleitung des demineralisierten Wassers, das ein der Brennstoffzelle (P) stammt, in zwei Leitungen (114 und 124) umfasst, von denen die eine in einen Behandlungsbehälter (200) mündet, wobei sich die Leitung von behandeltem Wasser (210) des Behälters mit der Leitung von nicht behandeltem Wasser (124) zur Mischung verbindet.

5. Vorrichtung (D') nach Anspruch 3, **dadurch gekennzeichnet, dass** ein erster Behandlungsbehälter (200a') ein Sättigungsreagens (R1) umfasst, das die Remineralisierung sicherstellt, und der zweite Behandlungsbehälter (200b') ein Sättigungsreagens (R2) umfasst, das die Korrektur des pH sicherstellt.

6. Vorrichtung (D, D', D3, D4) nach einem der Ansprüche 2 bis 5, **dadurch gekennzeichnet, dass** eine oder mehrere Leitungen mit einem Modul zur Regulierung des Durchsatzes (500, 500') ausgestattet ist/sind.

7. Vorrichtung (D, D', D3, D4) nach einem der Ansprüche 2 bis 6, **dadurch gekennzeichnet, dass** eine oder mehrere Leitungen mit einem Modul zur Filterung (400, 400') ausgestattet sind.

8. Vorrichtung (D, D', D3, D4) nach einem der Ansprüche 2 bis 7, **dadurch gekennzeichnet, dass** das Sättigungsreagens für die Mineralisierung und/oder für die Korrektur des pH die folgenden Elemente, assoziiert oder nicht, enthält:
- Calciumcarbonat,
- Calciumhydroxid
- Bicarbonate,
- Carbonate,
- Schwefelsäure,
- Ionenaustauschharz,
- mineralische Absorptionsmittel,
- Natriumchlorid,
- Calciumchlorid.

9. Vorrichtung (D, D', D3, D4) nach einem der Ansprüche 2 bis 7, **dadurch gekennzeichnet, dass** sie Mittel zur Messung der Mineralisierung und des pH am Ausgang der Vorrichtung umfasst, die die Daten an einen Automaten zur Steuerung des Moduls/der Module zur Regulierung des Durchsatzes schickt.

10. Vorrichtung (D, D', D3, D4) nach einem der Ansprüche 2 bis 8, **dadurch gekennzeichnet, dass** die Behandlungsbehälter (200, 200a', 200b') abnehmbar und austauschbar sind.

11. Vorrichtung (D, D', D3, D4) nach einem der Ansprüche 2 bis 9, **dadurch gekennzeichnet, dass** sie mindestens einen Durchlasssensor (600) umfasst, der ermöglicht, den Durchlass von Wasser vor und nach der Mischung zu messen, und mindestens eine Dosierpumpe (700), die am Ausgang des Behandlungsbehälters positioniert ist, um die Menge des behandelten Wassers, das mit dem nicht behandelten Wasser gemischt werden soll, zu dosieren.

12. Vorrichtung (D, D', D3, D4) nach einem der Ansprüche 2 bis 11, **dadurch gekennzeichnet, dass** sie ein Modul zur Desinfizierung (800) des Wassers nach der endgültigen Mischung umfasst.

## Claims

1. Method for remineralization and pH correction of water produced by a fuel cell (P) on board an aircraft, **characterized in that** it consists of diverting a portion of the water produced by the fuel cell to at least one treatment tank (200) containing a saturation reagent and mixing the flow of treated water coming from the treatment tank (200) with the flow of non-diverted water so as to obtain water with the desired mineralization and/or pH.

2. Device (D, D3) making it possible to implement the method according to claim 1, **characterized in that** it comprises a first distributor tank (100) in which the demineralized water from the fuel cell arrives, and from which at least two conduits (110, 120) emerge:
- a first conduit (110) leads into a second treatment tank (200) containing a saturation reagent (R) with which the water comes into contact for the purposes of remineralization and/or pH correction, the water thus treated being discharged to a third conduit (210),
- a second conduit (120) allows water coming directly from the first tank (100) to circulate, and is rejoined by the treated water coming from the second tank (200) for the purposes of mixing.

3. Device (D') making it possible to implement the method according to claim 1, **characterized in that** it comprises a first distributor tank (100') in which the demineralized water from the fuel cell arrives and from which three conduits (110', 120', 130') emerge:
- two conduits (110' and 120') each lead into a different treatment tank (200a' and 200b') comprising a saturation reagent (R1 and R2) with which the water comes into contact, the water thus treated being discharged to a fourth conduit (210a') and a fifth conduit (210b'),
- a third conduit (130') allows water coming directly from the first tank (100') to circulate and is rejoined by the treated water coming from the two treatment tanks (200a', 200b') inside a mixing tank (300') for the purposes of mixing.

4. Device (D4) enabling the method according to claim 1 to be implemented, **characterized in that** it comprises a division of the conduit for discharge of the demineralized water coming from the fuel cell (P) into two conduits (114 and 124), one of which leads into a treatment tank (200), and the treated water conduit (210) leaving said tank joins the non-treated water conduit (124) for the purposes of mixing.

5. Device (D') according to claim 3, **characterized in that** a first treatment tank (200a') comprises a saturation reagent (R1) ensuring remineralization and the second treatment tank (200b') comprises a saturation reagent (R2) ensuring the pH correction.

6. Device (D, D', D3, D4) according to any one of claims 2 to 5, **characterized in that** one or more conduits is or are equipped with a flow rate regulation module (500, 500').

7. Device (D, D', D3, D4) according to any one of claims 2 to 6, **characterized in that** one or more conduits is or are equipped with a filtration module (400, 400').

8. Device (D, D', D3, D4) according to any one of claims 2 to 7, **characterized in that** the saturation reagent for the remineralization and/or pH correction contains the following elements, associated or not:
- calcium carbonate,
- calcium hydroxide,
- bicarbonates,
- carbonates,
- sulfuric acid,
- ion exchange resin,
- mineral absorbents,
- sodium chloride,
- calcium chloride.

9. Device (D, D', D3, D4) according to any one of claims 2 to 7, **characterized in that** it comprises means for measuring the mineralization and the pH at the outlet of the device, communicating the data to an automated device for controlling the flow rate regulation module(s).

10. Device (D, D', D3, D4) according to any one of claims 2 to 8, **characterized in that** the treatment tanks (200, 200a', 200b') are detachable and interchangeable.

11. Device (D, D', D3, D4) according to any one of claims 2 to 9, **characterized in that** it comprises at least one flowmeter (600) making it possible to measure the flow rate of the water before or after mixing and at least one metering pump (700) positioned at the outlet of the treatment tank in order to measure the amount of treated water to be mixed with the non-treated water.

12. Device (D, D', D3, D4) according to any one of claims 2 to 11, **characterized in that** it comprises a module for disinfection (800) of the water after the final mixing.
